(19)

Europäisches
Patentamt

European
Patent Office

Office européen
des brevets

(11)  **EP 2 804 439 A1**

(12)  **EUROPEAN PATENT APPLICATION**
published in accordance with Art. 153(4) EPC

(43) Date of publication:
**19.11.2014 Bulletin 2014/47**

(21) Application number: **13755428.3**

(22) Date of filing: **16.01.2013**

(51) Int Cl.:
**H04W 74/08** (2009.01)

(86) International application number:
**PCT/CN2013/070523**

(87) International publication number:
**WO 2013/127279 (06.09.2013 Gazette 2013/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.02.2012  CN 201210050046**

(71) Applicant: **Huawei Technologies Co., Ltd
Shenzhen, Guangdong 518129 (CN)**

(72) Inventors:
• **WAN, Li
Shenzhen
Guangdong 518129 (CN)**

• **LE, Chunhui
Shenzhen
Guangdong 518129 (CN)**

(74) Representative: **Haley, Stephen
Gill Jennings & Every LLP
The Broadgate Tower
20 Primrose Street
London EC2A 2ES (GB)**

(54)  **RANDOM ACCESS METHOD, TERMINAL, BASE STATION AND SYSTEM**

(57)      The present invention discloses a random access method. The method includes: selecting, from a specified number of access sequences used by a cell in which a terminal is located, any one access sequence as a first access sequence; mapping the first access sequence onto a specified bandwidth according to a preset subcarrier spacing to generate a first random access signal, where the subcarrier spacing is less than 1.25 kHz; sending the random access signal to a base station, so that the base station determines a round-trip transmission delay according to the first access sequence in the random access signal; receiving a timing advance adjustment command sent by the base station, where the timing advance adjustment command carries the round-trip transmission delay; and adjusting a timing advance according to the round-trip transmission delay, and sending a first message to the base station according to the adjusted timing advance so that the base station demodulates the first message and enables the terminal to access a physical random access channel. Embodiments of the present invention can ensure that a terminal at a very long distance can access a physical random access channel.

FIG. 1

## Description

This application claims priority to Chinese Patent Application No. 201210050046.5, filed with the Chinese Patent Office on February 29, 2012 and entitled "RANDOM ACCESS METHOD, TERMINAL, BASE STATION AND SYSTEM", which is incorporated herein by reference in its entirety.

## TECHNICAL FIELD

The present invention relates to the field of communications technologies, and in particular, to a method for performing random access by means of a physical random access channel (Physical Random Access Channel, PRACH), a terminal and a base station.

## BACKGROUND

According to an existing protocol standard (TS25.913-900), a Long Term Evolution (Long Terms Evolution, LTE) system has very good performance in low-speed scenarios in which a terminal moves at a speed of 0-15 km/h, and continues to deliver relatively good performance when the terminal moves at a speed of 15-120 km/h; connectivity can be retained even when the terminal moves at a speed of 120-350 km/h or at a maximum speed of up to 500 km/h depending on frequency bands.

With development of communications technologies, users are imposing increasingly high communication requirements, and an operator imposes requirements on LTE signal coverage in a flight mode. In the flight mode, a terminal moves at a higher speed which may reach 800-1200 km/h. Due to the high moving speed of the terminal, a Doppler frequency shift of an access signal is greater on a same carrier. In addition, in order to reduce site construction costs, a base station of an LTE system in the prior art supports only cell coverage with a radius of 100 km, which is far from enough.

## SUMMARY

Embodiments of the present invention provide a random access method to enable a terminal at a distance of more than 100 km from a base station to access a physical random access channel. The embodiments of the present invention further provide a corresponding terminal, a base station, and a system.

A random access method includes:

   obtaining an index of a leading access sequence used by a cell in which a terminal is located;
   finding, from a pre-created candidate sequence list according to the index of the leading access sequence, a specified number of access sequences used by the cell in which the terminal is located, and selecting any one access sequence from the found specified number of access sequences as a first access sequence;
   mapping the first access sequence onto a specified bandwidth according to a preset subcarrier spacing to generate a first random access signal, where the subcarrier spacing is less than 1.25 kHz;
   sending the random access signal to a base station, so that the base station determines a round-trip transmission delay according to the first access sequence in the random access signal;
   receiving a timing advance adjustment command sent by the base station, where the timing advance adjustment command carries the round-trip transmission delay; and
   adjusting a timing advance according to the round-trip transmission delay, and sending a first message to the base station according to the adjusted timing advance so that the base station demodulates the first message and enables the terminal to access a physical random access channel.

A random access method includes:

   receiving random access indication information sent by a base station, where the random access indication information carries a specified access sequence index;
   selecting, from a pre-created candidate sequence list according to the specified access sequence index, an access sequence corresponding to the specified access sequence index as a second access sequence, and mapping the second access sequence onto a specified bandwidth according to a preset subcarrier spacing to generate a random access signal, where the subcarrier spacing is less than 1.25 kHz;
   sending the random access signal to the base station, so that the base station determines a round-trip transmission delay according to the second access sequence in the random access signal;
   receiving indication information of successful access to a physical random access channel which is sent by the base station, where the indication information of successful access carries the round-trip transmission delay; and

EP 2 804 439 A1

adjusting a timing advance according to the round-trip transmission delay to make the adjusted timing advance completely compensate for the round-trip transmission delay.

A random access method includes:

receiving a random access signal sent by a terminal, and obtaining a first access sequence carried in the random access signal;
determining a round-trip transmission delay according to the first access sequence;
sending a timing advance adjustment command to the terminal, where the timing advance adjustment command carries the determined round-trip transmission delay, so that the terminal adjusts a timing advance according to the round-trip transmission delay; and
receiving a first message sent by the terminal, and demodulating the first message, so that the terminal accesses a physical random access channel.

A random access method includes:

sending random access indication information to a terminal, where the random access indication information carries a specified access sequence index;
receiving a random access signal sent by the terminal, and obtaining a second access sequence from the random access signal;
determining a round-trip transmission delay according to the second access sequence; and
sending indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

A terminal includes:

a first obtaining unit, configured to obtain an index of a leading access sequence used by a cell in which a terminal is located;
a first query unit, configured to find, from a pre-created candidate sequence list according to the index of the leading access sequence that is obtained by the first obtaining unit, a specified number of access sequences used by the cell in which the terminal is located;
a first selecting unit, configured to select, from the specified number of access sequences found by the first query unit, any one access sequence as a first access sequence;
a first signal generating unit, configured to map the first access sequence selected by the first selecting unit onto a specified bandwidth according to a preset subcarrier spacing to generate a first random access signal, where the subcarrier spacing is less than 1.25 kHz;
a first sending unit, configured to send the first random access signal generated by the first signal generating unit to a base station, so that the base station determines a round-trip transmission delay according to the first access sequence in the random access signal;
a first receiving unit, configured to receive a timing advance adjustment command sent by the base station, where the timing advance adjustment command carries the round-trip transmission delay; and
a first adjusting unit, configured to adjust a timing advance according to the round-trip transmission delay carried in the timing advance adjustment command received by the first receiving unit;
the first sending unit is configured to send a first message to the base station according to the timing advance adjusted by the first adjusting unit, so that the base station demodulates the first message and enables the terminal to access a physical random access channel.

A terminal includes:

a second receiving unit, configured to receive random access indication information sent by a base station, where the random access indication information carries a specified access sequence index;
a second selecting unit, configured to select, from a pre-created candidate sequence list according to the specified access sequence index received by the second receiving unit, an access sequence corresponding to the specified access sequence index as a second access sequence;
a second signal generating unit, configured to map the second access sequence selected by the second selecting unit onto a specified bandwidth according to a preset subcarrier spacing to generate a random access signal, where

3

the subcarrier spacing is less than 1.25 kHz;

a second sending unit, configured to send the random access signal generated by the second signal generating unit to the base station, so that the base station determines a round-trip transmission delay according to the second access sequence in the random access signal;

the second receiving unit is further configured to receive indication information of successful access to a physical random access channel which is sent by the base station, where the indication information of successful access carries the round-trip transmission delay; and

a second adjusting unit, configured to adjust a timing advance according to the round-trip transmission delay carried in the indication information of successful access which is received by the second receiving unit, so that the adjusted timing advance completely compensates for the round-trip transmission delay.

A base station includes:

a third receiving unit, configured to receive a random access signal sent by a terminal;

a second obtaining unit, configured to obtain a first access sequence carried in the random access signal received by the third receiving unit;

a first determining unit, configured to determine a round-trip transmission delay according to the first access sequence obtained by the second obtaining unit;

a third sending unit, configured to send a timing advance adjustment command to the terminal, where the timing advance adjustment command carries the round-trip transmission delay determined by the first determining unit, so that the terminal adjusts a timing advance according to the round-trip transmission delay;

the third receiving unit is further configured to receive a first message sent by the terminal; and

a demodulating unit, configured to demodulate the first message received by the third receiving unit, to enable the terminal access a physical random access channel.

A base station includes:

a fourth sending unit, configured to send random access indication information to a terminal, where the random access indication information carries a specified access sequence index;

a fourth receiving unit, configured to receive a random access signal sent by the terminal;

a third obtaining unit, configured to obtain a second access sequence from the random access signal received by the fourth receiving unit; and

a second determining unit, configured to determine a round-trip transmission delay according to the second access sequence obtained by the third obtaining unit;

the fourth sending unit is further configured to send indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

A random access system includes a terminal and a base station, where the terminal is a terminal described in the foregoing technical solutions, and the base station is a base station described in the foregoing technical solutions.
In the embodiments of the present invention, an index of a leading access sequence used by a cell in which a terminal is located is obtained; according to the index of the leading access sequence, a specified number of access sequences used by the cell in which the terminal is located is found from a pre-created candidate sequence list, and any one access sequence is selected from the found specified number of access sequences as a first access sequence; the first access sequence is mapped onto a specified bandwidth according to a preset subcarrier spacing to generate a first random access signal, where the subcarrier spacing is less than 1.25 kHz; the first random access signal is sent to a base station, so that the base station determines a round-trip transmission delay according to the first access sequence in the random access signal; a timing advance adjustment command sent by the base station is received, where the timing advance adjustment command carries the round-trip transmission delay; and a timing advance is adjusted according to the round-trip transmission delay, and a first message is sent to the base station according to the adjusted timing advance so that the base station demodulates the first message and enables the terminal to access a physical random access channel. Compared with the prior art, in the random access method according to the embodiments of the present invention, a subcarrier spacing is less than 1.25 kHz, and a timing advance is adjusted according to the subcarrier spacing, which enables a terminal at a distance of more than 100 km from a base station to access a physical random access channel.

## BRIEF DESCRIPTION OF DRAWINGS

FIG. 1 is a schematic diagram of a random access method according to an embodiment of the present invention;
FIG. 2 is a schematic diagram of a random access method according to another embodiment of the present invention;
FIG. 3 is a schematic diagram of a random access method according to another embodiment of the present invention;
FIG. 4 is a schematic diagram of a random access method according to another embodiment of the present invention;
FIG. 5 is a schematic diagram illustrating an application scenario of embodiments of the present invention;
FIG. 6 is a schematic diagram illustrating another application scenario of embodiments of the present invention;
FIG. 7 is a schematic diagram of a terminal according to an embodiment of the present invention;
FIG. 8 is a schematic diagram of a terminal according to another embodiment of the present invention;
FIG. 9 is a schematic diagram of a terminal according to another embodiment of the present invention;
FIG. 10 is a schematic diagram of a terminal according to another embodiment of the present invention;
FIG. 11 is a schematic diagram of a terminal according to another embodiment of the present invention;
FIG. 12 is a schematic diagram of a terminal according to another embodiment of the present invention;
FIG. 13 is a schematic diagram of a base station according to an embodiment of the present invention;
FIG. 14 is a schematic diagram of a base station according to another embodiment of the present invention;
FIG. 15 is a schematic diagram of a base station according to another embodiment of the present invention; and
FIG. 16 is a schematic diagram of a system according to an embodiment of the present invention.

## DESCRIPTION OF EMBODIMENTS

Embodiments of the present invention provide a random access method to enable a terminal at a distance of more than 100 km from a base station to access a physical random access channel. The embodiments of the present invention further provide a corresponding terminal, a base station, and a system. The following provides detailed descriptions separately.

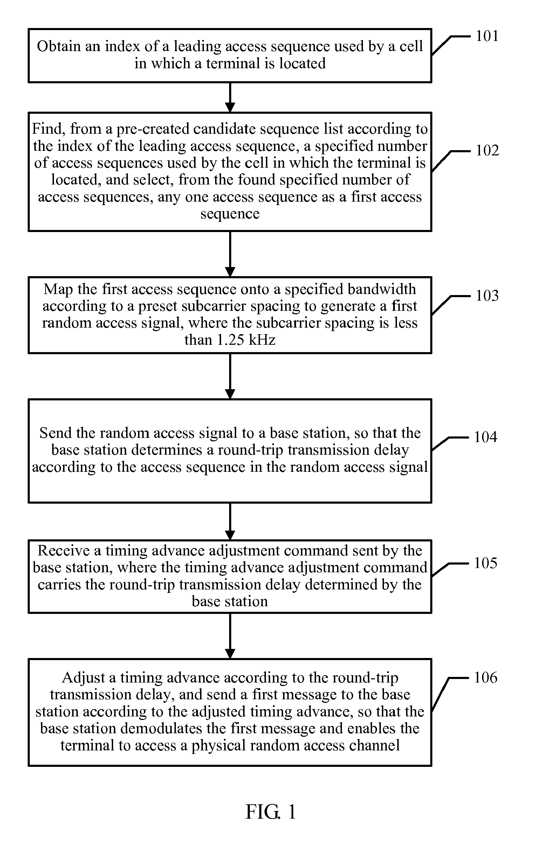

Referring to FIG. 1, from a perspective of a terminal, a random access method according to an embodiment of the present invention includes:

101. Obtain an index of a leading access sequence used by a cell in which a terminal is located.

Access of a terminal to a physical random access channel (Physical Random Access Channel, PRACH) includes contention-based access or non-contention-based access. This embodiment of the present invention focuses on a contention-based random access procedure.

In fact, the number of access sequences used by a terminal in each cell is specified beforehand. For example, 64 access sequences are usually used as candidate sequences for random access. A base station delivers, to each cell, the index of the leading access sequence in the 64 access sequences that each cell may use, so that a terminal of each cell may determine indexes of subsequent 63 access sequences according to the index of the leading access sequence where each index is corresponding to one access sequence, and the 64 access sequences are determined accordingly. For example, if the index of the leading access sequence which is sent by the base station to a cell is x, x to x+63 are corresponding to 64 access sequences.

102. Find, from a pre-created candidate sequence list according to the index of the leading access sequence, a specified number of access sequences used by the cell in which the terminal is located, and select, from the found specified number of access sequences, any one access sequence as a first access sequence.

In a contending mode state, in order to access a PRACH, the terminal needs to select any one access sequence (Preamble sequence) when generating a random access signal. Optionally, the access sequence is a ZC (Zadoff-Chu) sequence. In the prior art, a PRACH has two types of subcarrier spacing: one is 1.25 kHz and the other is 7.5 kHz, and a time domain length of an access sequence is 1/1.25=800 us and 1/7.5=133 us respectively. According to a calculation formula of a maximum cell radius, a round-trip transmission delay (Round Trip Delay, RTD) is equal to 2 times a cell radius divided by light speed, expressed as RTD=$2R_{cell}/c$, where $R_{cell}$ is the cell radius, and c is the light speed c=$3*10^8$. It may be calculated that the cell radius supported by the two types of carrier spacing is 119.9 km and 19.9 km respectively. In other words, a round-trip propagation delay corresponding to a cell radius of 1 km is 1000/($3*10^8$)*2=6.67 us. As stipulated in the protocol, a range of a timing advance (Timing Advance, TA) is limited to 0-1282, where each value is corresponding to 0.52 us. However, in the prior art, a supported maximum round-trip transmission time interval can only be 1282*0.52 = 667 us, and a supported maximum cell radius can only be 100 km.

In the present invention, in order to enable the terminal more than 100 km away to access a PRACH successfully, the time domain length of an access sequence needs to be greater than or equal to the round-trip transmission delay, which is expressed by a formula $1/\Delta f_{RA} \geq R_{cell}{}^{*2}/c$, where $\Delta f_{RA}$ is a subcarrier spacing, and $R_{cell}$ is a cell radius. In this way, it may be deduced that the subcarrier spacing $\Delta f_{RA}$ is less than or equal to $c/R_{cell}{}^{*}2$. If impact of a multi-path channel is taken into account, the foregoing relational expression is $1/\Delta f_{RA} \geq R_{cell} * 2/c + \tau_{max}$, where $\tau_{max}$ denotes a maximum multi-path delay. When the cell radius is 100 km, $\Delta f_{RA}$ needs to be less than or equal to 1.5 kHz. The carrier spacing in the prior art is 1.25 kHz; therefore, in order to ensure that the terminal more than 100 KM away can access a base station successfully, in particular to ensure that the terminal at a very long distance away can also access a PRACH successfully, for example, to ensure that the terminal at a distance of 200 km away is able to access a PRACH, the subcarrier spacing needs to be less than 1.25 kHz. For example, if a multi-path delay is taken into account, when $R_{cell} = 222.7 km$ and $\tau_{max} = 5us$, the PRACH subcarrier spacing may be set to a positive value that satisfies $\Delta f_{RA} \leq 671.3$ Hz. Here, for ease of implementation, the value needs to be a multiple of 15 kHz, and therefore, $\Delta f_{RA} = 625$ Hz is applied. That is, when $\Delta f_{RA} = 625$ Hz, it may be ensured that the terminal at a distance of 222.7 km away can access a PRACH.

Apparently, to avoid a limitation on a value range of the TA, the TA needs to be extended. For example, the TA in the prior art is 11 bits, which may be extended to 12 bits so that the value range of the TA may be 0-4097, which, after being converted into time, may support a maximum round-trip transmission time interval of 4097*0.52=2130 us.

Because the subcarrier spacing becomes smaller and a bandwidth occupied by an access sequence is unchanged, an access sequence length needs to change. A relationship among the subcarrier spacing, the access sequence length, and a specified bandwidth may be expressed by a formula of $L_{seq} * \Delta f_{RA} \geq$ specified bandwidth, where the specified bandwidth is a reciprocal of timing accuracy. For example, at the time of protocol design, it is deemed that the accuracy of TA estimation is 1 us, and 1/1 us=1 MHz, and therefore, 1 us is corresponding to a 1 MHz bandwidth, where $L_{seq}$ is the access sequence length, and $\Delta f_{RA}$ is the subcarrier spacing. To maximize the number of access sequences, $L_{seq}$ is set to a prime number so that the total number of available access sequences is $L_{seq}$-1. For example, when $\Delta f_{RA} = 625$ Hz, for a 1 MHz bandwidth, it needs to be satisfied that $L_{seq}$ is approximately 1600. Because the access sequence length has changed, an access sequence list needs to be created first. Selection of an access sequence depends on the access sequence length and the index of the access sequence. To ensure a maximum number of available access sequences, $L_{seq}$ is preferably a prime number. If $L_{seq}$ is 1601, there are 1600 available access sequences, and the candidate sequence list includes 1600 access sequences.

If $L_{seq}$ is not set to a prime number, for example, $L_{seq}$=1602, the access sequence index range is 1-1601, and each index may be coupled with $L_{seq}$=1602 to obtain an access sequence. However, not every access sequence among the access sequences is suitable for being a candidate access sequence. In a low frequency shift scenario, only an access sequence whose index is coprime to the access sequence length may be selected as a candidate access sequence, and then the candidate sequence list is created. A process of creating the candidate sequence list is: calculating the access sequence length according to the preset subcarrier spacing and the specified bandwidth; and determining an access sequence index range according to the access sequence length, selecting an access sequence as a candidate access sequence, where the access sequence length is coprime to an index of the access sequence, and creating the candidate sequence list.

In a high frequency shift scenario, an access sequence not only needs to meet the coprime condition, but also needs to satisfy a requirement that a specified shift value $d_u$ be less than a preset threshold, where the specified shift value $d_u$ refers to a shift of a mirror peak output by a receiver against the round-trip delay when the frequency shift is $1/T_{SEQ}$; and $T_{SEQ}$ is the time domain length of an access sequence, and in fact, $T_{SEQ}$ is a reciprocal of the subcarrier spacing.

To eliminate ambiguity of RTD estimation due to a frequency shift, an access sequence with a relatively small absolute value of $d_u$ needs to be selected. If the actual frequency shift can reach $\pm N\Delta f_{RA}$, an RTD estimation error may reach $[-N*d_u, N*d_u]$, which is converted into an absolute time $[-(N*du)/(\Delta f_{RA} * L_{seq}), (N*du)/(\Delta f_{RA}*L_{seq})]$ in unit of seconds, N is a quantized order. A range of $d_u$ may be set according to system tolerance of the RTD error, so as to determine the number of available access sequences. The preset threshold mentioned in this embodiment of the present invention is actually a $d_u$ value that satisfies maximum tolerance of the RTD error.

The following describes a process of deducing $d_u$:

According to a definition of a random access sequence in the 3GPP TS 36.211 protocol, the $u$th ZC sequence is expressed as:

$$x_u(n) = e^{-j\frac{\pi u n(n+1)}{N_{ZC}}}, \quad 0 \leq n \leq N_{ZC} - 1 \quad \text{(formula 1)}$$

where u is called a physical root sequence number, and $N_{ZC}$ is the number of gross samples of a generated ZC sequence.

When a frequency shift of $\Delta f$ (unit: Hz) exists, a sequence with a frequency shift may be expressed as:

$$x_u\left(n,\Delta f\right) = e^{-j\frac{\pi u n(n+1)}{N_{ZC}}}\, e^{\frac{2\pi n}{N_{ZC}}\Delta f \cdot T_{SEQ}}, \quad 0 \le n \le N_{ZC} - 1 \quad \text{(formula 2)}$$

where $T_{SEQ}$ is a time-domain length of the ZC sequence.

When

$$\Delta f = \frac{1}{T_{SEQ}}, \quad x_u\left(n,\Delta f\right) = x_u\left(n - d_u\right)e^{j\Phi_u} \quad \text{(formula 3)}$$

where the meaning of $d_u$ is as follows:

$$d_u = \begin{cases} p & 0 \le p < N_{ZC}/2 \\ N_{ZC} - p & other \end{cases} \quad \text{(formula 4)}$$

where $p$ is a minimum non-negative integer of $(p \cdot u)\mathrm{mod}\, N_{zc}=1$, mod is a modulus operator, and $(p \cdot u)\mathrm{mod}\, N_{zc}=1$ means that a remainder is 1 after $(p \cdot u)$ is divided by $N_{ZC}$.

Therefore, when

$$\Delta f = \frac{1}{T_{SEQ}}, \quad x_u\left(n,\Delta f\right) = x_u\left(n - d_u\right)e^{j\Phi_u}.$$

Similarly, when

$$\Delta f = -\frac{1}{T_{SEQ}}, \quad x_u\left(n,\Delta f\right) = x_u\left(n + d_u\right)e^{j\Phi'_u}.$$

Therefore, $d_u$ refers to a shift of a mirror peak output by a receiver against the round-trip delay when the frequency shift is $1/T_{SEQ}$. After $N_{ZC}$ is a fixed value, according to formula 3 and formula 4, $d_u$ depends on a value of u, and p also depends on the value of u. Therefore, the $d_u$ value of each sequence whose physical root sequence number is u may be regarded as a feature of the sequence itself.

In a high frequency shift scenario, a process of creating a candidate sequence list may be described as: calculating the access sequence length according to the preset subcarrier spacing and the specified bandwidth; and determining an access sequence index range according to the access sequence length, selecting an access sequence as a candidate access sequence, where an index of the access sequence is coprime to the access sequence length and a specified shift value $d_u$ of the access sequence is less than a preset threshold, and creating the candidate sequence list. The preset threshold mentioned in this embodiment of the present invention is actually a $d_u$ value that satisfies maximum tolerance for the RTD error.

103. Map the first access sequence onto a specified bandwidth according to a preset subcarrier spacing to generate a first random access signal, where the subcarrier spacing is less than 1.25 kHz.

When the terminal needs to initiate random access, any one access sequence needs to be selected from the candidate sequence list created according to the foregoing two solutions, and the selected access sequence is mapped onto a specified bandwidth according to a preset subcarrier spacing to generate a random access signal, where the subcarrier spacing is less than 1.25 kHz. In other words, in a low frequency shift scenario, the terminal needs only to select any one access sequence from the candidate sequence list that satisfies a condition that an index of each candidate access sequence is coprime to the access sequence length, and map the selected access sequence onto the specified bandwidth according to the preset subcarrier spacing to generate a random access signal, and then the random access procedure can be initiated. In a high frequency shift scenario, the terminal preferably selects any one access sequence from a candidate sequence list that satisfies both conditions that the index of each candidate access sequence is coprime to the access sequence length and $d_u$ is less than a preset threshold, to generate a random access signal and initiate a random access process, thereby avoiding generation of a too large Doppler frequency shift and impact on RTD determining.

104. Send the random access signal to a base station, so that the base station determines a round-trip transmission delay according to the access sequence in the random access signal.

The terminal sends the random access signal generated in step 103 to the base station. After receiving the random access signal, the base station obtains the first access sequence carried in the random access signal; and, after determining a specified number of access sequences used by the cell in which the terminal is located, the base station performs correlation on each access sequence among the specified number of determined access sequences and the first access sequence separately, and determines the round-trip transmission delay according to a location of a maximum peak value after the correlation. Alternatively, the base station determines a specified number of access sequences used by the cell in which the terminal is located, performs correlation on each access sequence among the specified number of determined access sequences and the first access sequence separately, and determines the round-trip transmission delay according to a location of a first-path peak value after the correlation, where one path of signals sent from the terminal becomes multiple paths of signals in a transmission process, and the first path refers to a path of signals that first arrives at the base station.

105. Receive a timing advance adjustment command sent by the base station, where the timing advance adjustment command carries the round-trip transmission delay determined by the base station.

After determining the round-trip transmission delay, the base station instructs the terminal to adjust a timing advance according to the round-trip transmission delay, for example, when the round-trip transmission delay is 1334 us, the TA is adjusted to 2564.

106. Adjust a timing advance according to the round-trip transmission delay, and send a first message to the base station according to the adjusted timing advance, so that the base station demodulates the first message and enables the terminal to access a physical random access channel.

The first message is sent to the base station according to the adjusted timing advance, where the first message includes an identifier of the terminal. After receiving the first message, the base station demodulates the first message, uses a second message to carry the terminal identifier that is carried in the first message, and sends the second message to the terminal. After receiving the second message, the terminal identifies the terminal identifier carried in the second message. If the terminal confirms that the terminal identifier in the second message is its own terminal identifier, the terminal sends an access response message to the base station, so that the base station confirms that the terminal has accessed the physical random access channel.

The base station may receive the first messages sent from several terminals simultaneously. Because the base station can demodulate the first message of only one terminal, the base station uses the second message to carry an identifier of the terminal after the demodulation, so that the terminal confirms that the information is sent to the terminal.

If a large frequency shift exists, the base station side may be unable to perform demodulation correctly. In this case, a frequency shift range $[-N\Delta f_{RA}, N\Delta f_{RA}]$ may be graded, and it is recommended that the first message be demodulated for each grade of the frequency shift range at an interval of 1 kHz. In fact, the frequency shift range is a result of combined effects of a crystal oscillator deviation between the base station and a UE, a carrier of a system, a moving speed and direction of the UE, and the like. In this embodiment of the present invention, quantization is merely performed according to a subcarrier spacing of a physical random access channel, where N is a quantized order.

In this embodiment of the present invention, an index of a leading access sequence used by a cell in which a terminal is located is obtained; according to the index of the leading access sequence, a specified number of access sequences used by the cell in which the terminal is located is found from a pre-created candidate sequence list, and any one access sequence is selected from the found specified number of access sequences as a first access sequence; the first access sequence is mapped onto a specified bandwidth according to a preset subcarrier spacing to generate a first random access signal, where the subcarrier spacing is less than 1.25 kHz; the first random access signal is sent to a base station, so that the base station determines a round-trip transmission delay according to the first access sequence in the random access signal; a timing advance adjustment command sent by the base station is received, where the timing advance adjustment command carries the round-trip transmission delay; and a timing advance is adjusted according to the round-trip transmission delay, and a first message is sent to the base station according to the adjusted timing advance, so that the base station demodulates the first message and enables the terminal to access a physical random access channel. Compared with the prior art, in the random access method according to this embodiment of the present invention, a subcarrier spacing is less than 1.25 kHz, and a timing advance is adjusted according to the subcarrier spacing, which enables a terminal at a distance of more than 100 km from a base station to access a physical random access channel.

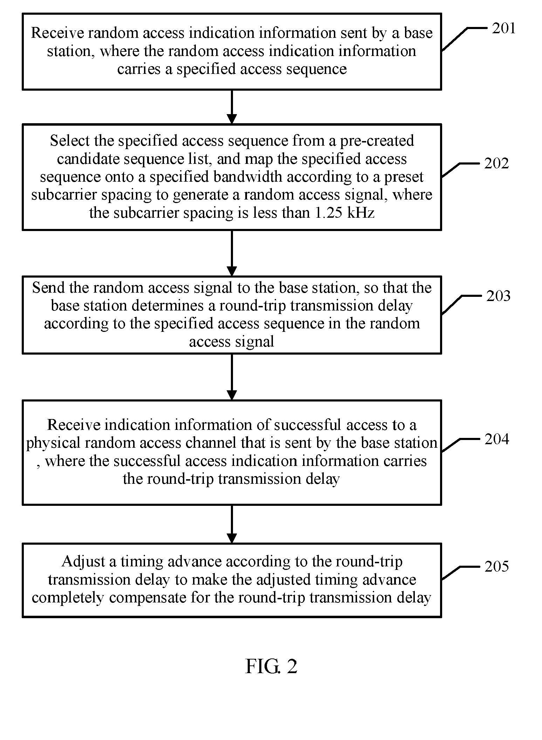

Referring to FIG. 2, from a perspective of a terminal, a random access method according to an embodiment of the present invention includes:

201. Receive random access indication information sent by a base station, where the random access indication information carries a specified access sequence index.

This embodiment of the present invention focuses on a non-contention-based random access procedure. Non-contention-based random access refers to a random access procedure performed by a terminal as indicated by a base station.

A same candidate access sequence list is preset on the base station side and the terminal side. When the base station specifies a terminal for performing access, the random access indication information carries a specified access sequence index.

202. Select, from a pre-created candidate sequence list according to the specified access sequence index, an access sequence corresponding to the specified access sequence index as a second access sequence, and map the second access sequence onto a specified bandwidth according to a preset subcarrier spacing to generate a random access signal, where the subcarrier spacing is less than 1.25 kHz.

After receiving the random access indication information, the terminal selects a second access sequence from a pre-created candidate sequence list according to the specified access sequence index. This embodiment of the present invention provides two solutions to creating a candidate sequence list. One solution is: calculating an access sequence length according to the preset subcarrier spacing and the specified bandwidth; and determining an access sequence index range according to the access sequence length, selecting an access sequence as a candidate access sequence, where the access sequence length is coprime to an index of the access sequence, and creating the candidate sequence list. The candidate sequence list created according to this solution is applicable to a low frequency shift scenario, where, if an access sequence corresponding to the specified access sequence index is an access sequence whose root sequence index is coprime to the length of the candidate access sequence, the terminal selects, from the candidate sequence list, the access sequence corresponding to the specified access sequence index as a second access sequence. The other solution is: calculating an access sequence length according to the preset subcarrier spacing and the specified bandwidth; and determining an access sequence index range according to the access sequence length, selecting an access sequence as a candidate access sequence, where the access sequence length is coprime to an index of the access sequence and a specified shift value $d_u$ is less than a preset threshold, and creating the candidate sequence list. The candidate sequence list created according to this solution is applicable to a high frequency shift scenario, where, when the access sequence specified by the base station needs to satisfy both of the following conditions: a root sequence index is coprime to the length of the candidate access sequence, and $d_u$ is less than a preset threshold, then the terminal selects, from the candidate sequence list, an access sequence corresponding to the specified access sequence index as a second access sequence.

After selecting the second access sequence, the terminal maps the second access sequence onto the specified bandwidth according to the preset subcarrier spacing to generate a random access signal. The solution to adjusting the subcarrier spacing according to this embodiment of the present invention is the same as steps 102 and 103 described above, and details are not described herein again.

203. Send the random access signal to the base station, so that the base station determines a round-trip transmission delay according to the second access sequence in the random access signal.

This step is the same as step 104 described above, and details are not described herein again.

204. Receive indication information of successful access to a physical random access channel which is sent by the base station, where the indication information of successful access carries the round-trip transmission delay.

In this embodiment, non-contention-based access is applied, and the base station side already knows the sequence that is used when the terminal sends the random access signal, and therefore, the base station may, after receiving the random access signal, enable the terminal to receive a PRACH.

205. Adjust a timing advance according to the round-trip transmission delay to make the adjusted timing advance completely compensate for the round-trip transmission delay.

This step is the same as step 106 described above, and details are not described herein again.

In this embodiment of the present invention, random access indication information sent by a base station is received, where the random access indication information carries a specified access sequence index; according to the specified access sequence index, an access sequence corresponding to the specified access sequence index is selected from a pre-created candidate sequence list as a second access sequence, and the second access sequence is mapped onto a specified bandwidth according to a preset subcarrier spacing to generate a random access signal, where the subcarrier spacing is less than 1.25 kHz; the random access signal is sent to the base station, so that the base station determines a round-trip transmission delay according to the second access sequence in the random access signal; indication information of successful access to a physical random access channel which is sent by the base station is received, where the indication information of successful access carries the round-trip transmission delay; and a timing advance is adjusted according to the round-trip transmission delay to make the adjusted timing advance completely compensate for the round-trip transmission delay. Compared with the prior art, the random access method according to this embodiment of the present invention enables a terminal, which is located far away and moves at a high speed, to access a physical random access channel.

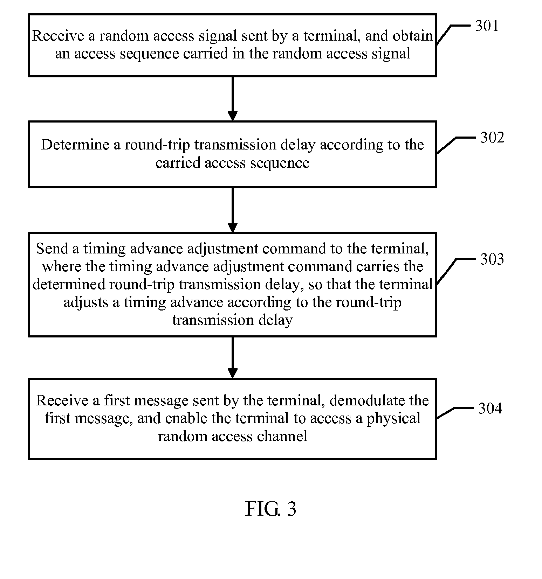

Referring to FIG. 3, from a perspective of a base station, a random access method according to another embodiment of the present invention includes:

301. Receive a random access signal sent by a terminal, and obtain a first access sequence carried in the random access signal.

In a case of contention-based access, after receiving the random access signal sent by the terminal, a base station obtains a first access sequence from the random access signal.

302. Determine a round-trip transmission delay according to the first access sequence.

This embodiment of the present invention provides two solutions to determining the round-trip transmission delay:

One solution is: determining a specified number of access sequences used by a cell in which the terminal is located, performing correlation on each access sequence among the specified number of determined access sequences and the first access sequence separately, and determining the round-trip transmission delay according to a location of a maximum peak value after the correlation.

The other solution is: determining a specified number of access sequences used by a cell in which the terminal is located, performing correlation on each access sequence among the specified number of determined access sequences and the first access sequence separately, and determining the round-trip transmission delay according to a location of a first-path peak value after the correlation.

A candidate sequence list in the base station is the same as a candidate sequence list in the terminal.

303. Send a timing advance adjustment command to the terminal, where the timing advance adjustment command carries the determined round-trip transmission delay, so that the terminal adjusts a timing advance according to the round-trip transmission delay.

After determining the round-trip transmission delay, the base station sends a timing advance adjustment command to the terminal, where the timing advance adjustment command carries the determined round-trip transmission delay, so that the terminal adjusts a timing advance according to the round-trip transmission delay, for example, when the round-trip transmission delay is 1334 us, the TA is adjusted to 2564.

304. Receive a first message sent by the terminal, demodulate the first message, and enable the terminal to access a physical random access channel.

In a case of a large frequency shift, a frequency shift range may be obtained first, and then the frequency shift range is graded; and the first message is demodulated within the graded frequency shift range separately. If a large frequency shift exists, the base station side may be unable to perform demodulation correctly. In this case, a frequency shift range $[-N\Delta f_{RA}, N\Delta f_{RA}]$ may be graded, and it is recommended that the first message be demodulated for each grade of the frequency shift range at an interval of 1 kHz. In fact, the frequency shift range is a result of combined effects of a crystal oscillator deviation between the base station and a UE, a carrier of a system, a moving speed and direction of the UE, and the like. In this embodiment of the present invention, quantization is merely performed according to a subcarrier spacing of a physical random access channel, where N is a quantized order.

After obtaining an identifier of the terminal from the first message, the base station sends a second message to the terminal, and uses the second message to carry the terminal identifier so that the terminal confirms that the information is sent to the terminal. After recognizing the terminal identifier carried in the second message, the terminal sends an access response message to the base station. The base station receives the access response message sent by the terminal, to confirm that the terminal has accessed a physical random access channel.

In this embodiment of the present invention, a random access signal sent by a terminal is received, and a first access sequence is obtained from the random access signal; a round-trip transmission delay is determined according to the first access sequence; a timing advance adjustment command is sent to the terminal, where the timing advance adjustment command carries the determined round-trip transmission delay, so that the terminal adjusts a timing advance according to the round-trip transmission delay; and a first message sent by the terminal is received, the first message is demodulated, and the terminal accesses a physical random access channel. Compared with the prior art, the random access method according to this embodiment of the present invention enables a terminal, which is located far away and moves at a high speed, to access a PRACH.

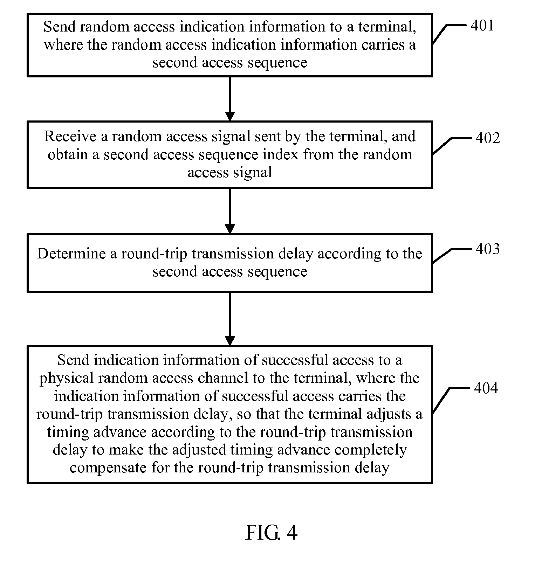

Referring to FIG. 4, from a perspective of a base station, a random access method according to another embodiment of the present invention includes:

401. Send random access indication information to a terminal, where the random access indication information carries a specified access sequence index.

For non-contention-based random access, a base station specifies a random access sequence of the terminal when sending the random access indication information.

402. Receive a random access signal sent by the terminal, and obtain a second access sequence from the random access signal.

403. Determine a round-trip transmission delay according to the second access sequence.

The base station side receives the random access signal from the terminal, determines, according to an index of a leading access sequence of a cell in which the terminal is located, a specified number of access sequences used by the cell in which the terminal is located, performs correlation on each access sequence among the specified number of determined access sequences and the second access sequence separately, and determines the round-trip transmission delay according to a location of a maximum peak value after the correlation. Alternatively, the base station determines, according to an index of a leading access sequence of a cell in which the terminal is located, a specified number of access sequences used by the cell in which the terminal is located, performs correlation on each access sequence among the specified number of determined access sequences and the second access sequence separately, and determines the round-trip transmission delay according to a location of a first-path peak value after the correlation.

404. Send indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

In this embodiment, non-contention-based access is applied, and the base station side already knows the sequence that is used when the terminal sends the random access signal, and therefore, the base station may, after receiving the random access signal, enable the terminal to receive a PRACH.

In this embodiment of the present invention, random access indication information is sent to a terminal, where the random access indication information carries a second access sequence; a random access signal sent by the terminal is received, and the second access sequence is obtained from the random access signal; a round-trip transmission delay is determined according to the second access sequence; and indication information of successful access to a physical random access channel is sent to the terminal, where the indication information of successful access carries the round-trip transmission delay, so that the terminal adjusts a timing advance according to the round-trip transmission delay to make the adjusted timing advance completely compensate for the round-trip transmission delay. Compared with the prior art, the random access method according to this embodiment of the present invention enables a terminal, which is located far away and moves at a high speed, to access a PRACH.

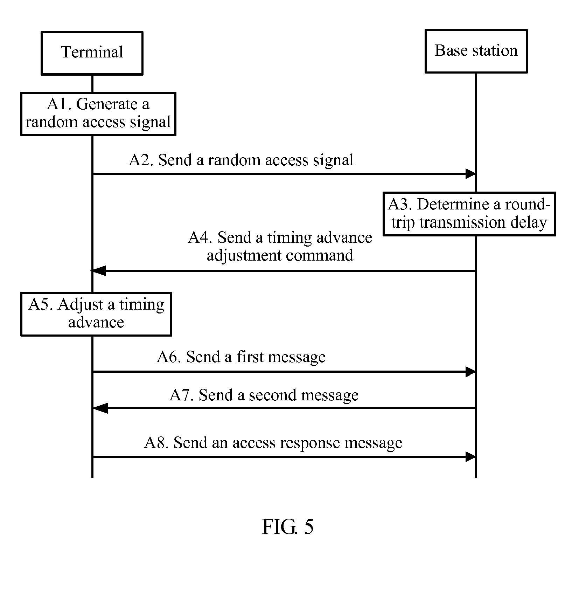

Referring to FIG. 5, for ease of understanding, the following describes a contention-based random access procedure by using a specific application scenario:

A1. A terminal obtains an index of a leading access sequence that is sent by a base station, finds, from a pre-created candidate sequence list according to the index of the leading access sequence, a specified number of access sequences used in a cell in which the terminal is located, selects, from the found specified number of access sequences, any one access sequence as a first access sequence, and maps the first access sequence onto a specified bandwidth according to a preset subcarrier spacing to generate a random access signal, where the subcarrier spacing is less than 1.25 kHz.

A2. The terminal sends the random access signal to the base station.

A3. The base station determines a round-trip transmission delay according to the first access sequence in the random access signal.

A4. The base station sends a timing advance adjustment command, where the timing advance adjustment command carries the round-trip transmission delay determined by the base station.

A5. The terminal adjusts a timing advance according to the round-trip transmission delay to make the adjusted timing advance completely compensate for the round-trip transmission delay.

A6. The terminal sends a first message to the base station according to the adjusted timing advance.

A7. The base station sends a second message to the terminal, where the second message carries a terminal identifier.

A8. The terminal identifies the terminal identifier carried in the second message, and, if the terminal identifier is the same as an identifier of the terminal, sends an access response message to the base station so that the base station confirms that the terminal has already accessed a physical random access channel.

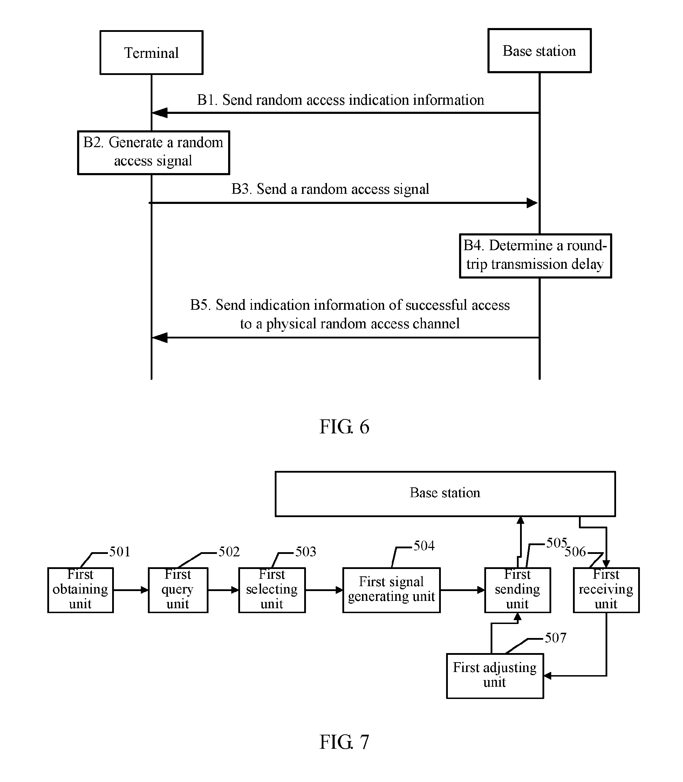

Referring to FIG. 6, for ease of understanding, the following describes a non-contention-based random access procedure by using a specific application scenario:

B 1. A base station sends random access indication information, where the random access indication information carries a specified access sequence index.

B2. A terminal selects, from a pre-created candidate sequence list according to the specified access sequence index, an access sequence corresponding to the specified access sequence index as a second access sequence, and maps the specified access sequence onto a specified bandwidth according to a preset subcarrier spacing to generate a random access signal, where the subcarrier spacing is less than 1.25 kHz.

B3. The terminal sends the random access signal to the base station, so that the base station determines a round-trip transmission delay according to the second access sequence in the random access signal.

B4. The base station determines a round-trip transmission delay according to the access sequence in the random access signal.

B5. The base station sends indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

Referring to FIG. 7, a terminal according to an embodiment of the present invention includes:

a first obtaining unit 501, configured to obtain an index of a leading access sequence used by a cell in which a terminal is located;

a first query unit 502, configured to find, from a pre-created candidate sequence list according to the index of the leading access sequence that is obtained by the first obtaining unit 501, a specified number of access sequences used by the cell in which the terminal is located;

a first selecting unit 503, configured to select, from the specified number of access sequences found by the first query unit 502, any one access sequence as a first access sequence;

a first signal generating unit 504, configured to map the first access sequence selected by the first selecting unit 503 onto a specified bandwidth according to a preset subcarrier spacing to generate a first random access signal, where the subcarrier spacing is less than 1.25 kHz;

a first sending unit 505, configured to send the first random access signal generated by the first signal generating unit 504 to a base station, so that the base station determines a round-trip transmission delay according to the first access sequence in the random access signal;

a first receiving unit 506, configured to receive a timing advance adjustment command sent by the base station, where the timing advance adjustment command carries the round-trip transmission delay; and

a first adjusting unit 507, configured to adjust a timing advance according to the round-trip transmission delay carried in the timing advance adjustment command received by the first receiving unit 506, where

the first sending unit 505 is configured to send a first message to the base station according to the timing advance adjusted by the first adjusting unit 507, so that the base station demodulates the first message and enables the terminal to access a physical random access channel.

In this embodiment of the present invention, a first obtaining unit 501 obtains an index of a leading access sequence used by a cell in which a terminal is located; a first query unit 502 finds, from a pre-created candidate sequence list according to the index of the leading access sequence that is obtained by the first obtaining unit 501, a specified number of access sequences used by the cell in which the terminal is located; a first selecting unit 503 selects, from the specified number of access sequences found by the first query unit 502, any one access sequence as a first access sequence; a first signal generating unit 504 maps the first access sequence selected by the first selecting unit 503 onto a specified bandwidth according to a preset subcarrier spacing to generate a first random access signal, where the subcarrier spacing is less than 1.25 kHz; a first sending unit 505 sends the first random access signal generated by the first signal generating unit 504 to a base station, so that the base station determines a round-trip transmission delay according to the first access sequence in the random access signal; a first receiving unit 506 receives a timing advance adjustment command sent by the base station, where the timing advance adjustment command carries the round-trip transmission delay; and a first adjusting unit 507 adjusts a timing advance according to the round-trip transmission delay carried in the timing advance adjustment command received by the first receiving unit 506, where the first sending unit 505 sends a first message to the base station according to the timing advance adjusted by the first adjusting unit 507 so that the base station demodulates the first message and enables the terminal to access a physical random access channel. The terminal according to this embodiment of the present invention may be able to access a PRACH even when the terminal is located far away and moves at a high speed.

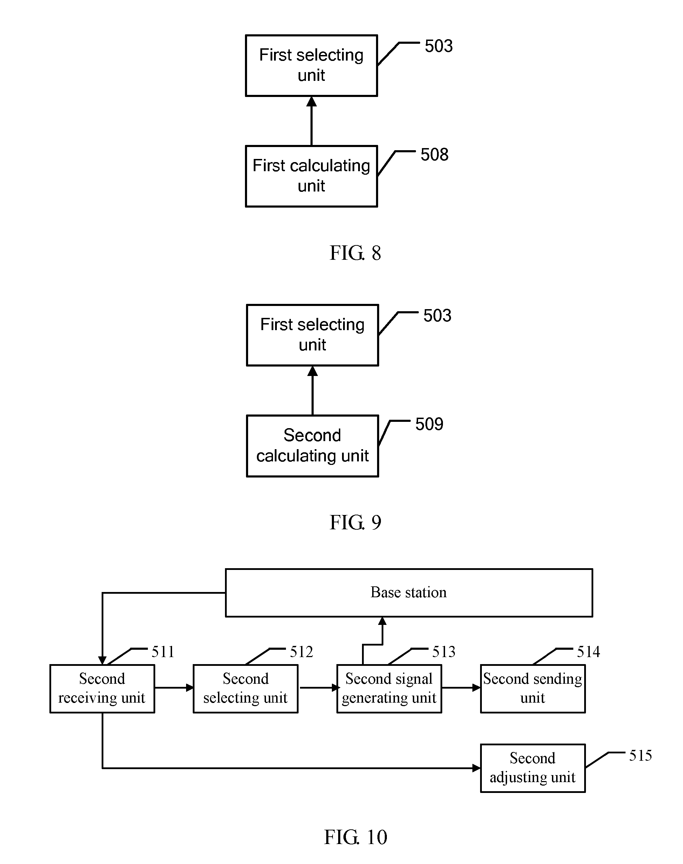

Referring to FIG. 8, based on the embodiment corresponding to FIG. 7, a terminal according to another embodiment of the present invention further includes:

a first calculating unit 508, configured to calculate an access sequence length according to the preset subcarrier spacing and the specified bandwidth, where

the first selecting unit 503 is further configured to determine an access sequence index range according to the access sequence length that is calculated by the first calculating unit 508, select an access sequence as a candidate access sequence, where the access sequence length is coprime to an index of the access sequence, and create the candidate sequence list.

Referring to FIG. 9, based on the embodiment corresponding to FIG. 7, a terminal according to another embodiment of the present invention further includes:

a second calculating unit 509, configured to calculate an access sequence length according to the preset subcarrier spacing and the specified bandwidth, where
the first selecting unit 503 is further configured to determine an access sequence index range according to the access sequence length that is calculated by the second calculating unit 509, select an access sequence as a candidate access sequence, where the access sequence length is coprime to an index of the access sequence and a specified shift value $d_u$ is less than a preset threshold, and create the candidate sequence list.

Referring to FIG. 10, a terminal according to another embodiment of the present invention includes:

a second receiving unit 511, configured to receive random access indication information sent by a base station, where the random access indication information carries a specified access sequence index;
a second selecting unit 512, configured to select, from a pre-created candidate sequence list according to the specified access sequence index received by the second receiving unit 511, an access sequence corresponding to the specified access sequence index as a second access sequence;
a second signal generating unit 513, configured to map the second access sequence selected by the second selecting unit 512 onto a specified bandwidth according to a preset subcarrier spacing to generate a random access signal, where the subcarrier spacing is less than 1.25 kHz;
a second sending unit 514, configured to send the random access signal generated by the second signal generating unit 513 to the base station, so that the base station determines a round-trip transmission delay according to the second access sequence in the random access signal, where
the second receiving unit 511 is further configured to receive indication information of successful access to a physical random access channel which is sent by the base station, where the indication information of successful access carries the round-trip transmission delay; and
a second adjusting unit 515, configured to adjust a timing advance according to the round-trip transmission delay carried in the indication information of successful access which is received by the second receiving unit 511, so that the adjusted timing advance completely compensates for the round-trip transmission delay.

In this embodiment of the present invention, a second receiving unit 511 receives random access indication information sent by a base station, where the random access indication information carries a specified access sequence index; a second selecting unit 512 selects, from a pre-created candidate sequence list according to the specified access sequence index received by the second receiving unit 511, an access sequence corresponding to the specified access sequence index as a second access sequence; a second signal generating unit 513 maps the second access sequence selected by the second selecting unit 512 onto a specified bandwidth according to a preset subcarrier spacing to generate a random access signal, where the subcarrier spacing is less than 1.25 kHz; a second sending unit 514 sends the random access signal generated by the second signal generating unit 513 to the base station, so that the base station determines a round-trip transmission delay according to the second access sequence in the random access signal; the second receiving unit 511 receives indication information of successful access to a physical random access channel which is sent by the base station, where the indication information of successful access carries the round-trip transmission delay; and a second adjusting unit 515 adjusts a timing advance according to the round-trip transmission delay carried in the indication information of successful access which is received by the second receiving unit 511, so that the adjusted timing advance completely compensates for the round-trip transmission delay. The terminal according to this embodiment of the present invention may be able to access a PRACH even when the terminal is located far away and moves at a high speed.

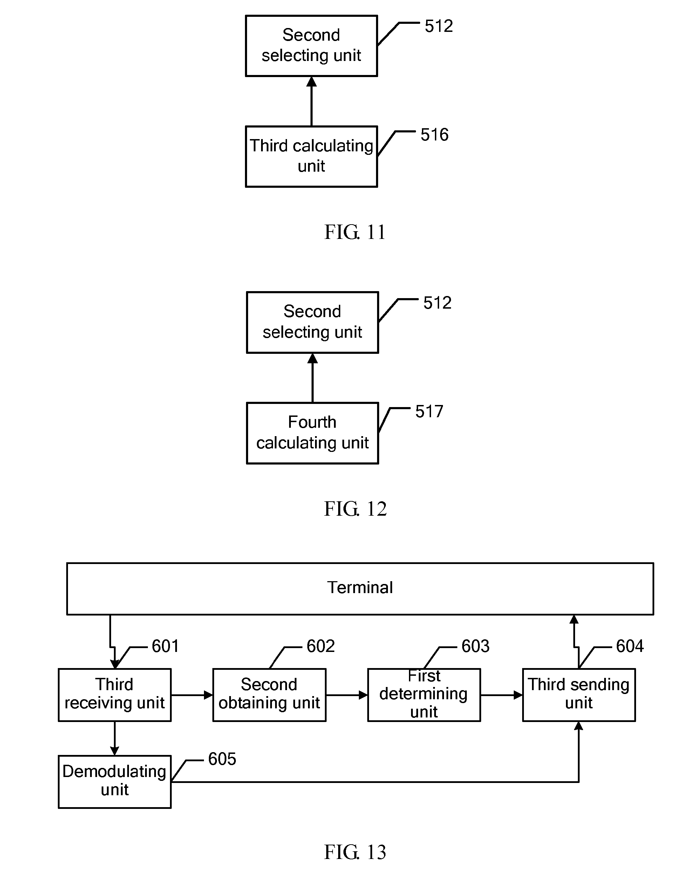

Referring to FIG. 11, based on the embodiment corresponding to FIG. 10, a terminal according to another embodiment of the present invention further includes:

a third calculating unit 516, configured to calculate an access sequence length according to the preset subcarrier spacing and the specified bandwidth, where
the second selecting unit 512 is further configured to determine an access sequence index range according to the access sequence length that is calculated by the third calculating unit 516, select an access sequence as a candidate access sequence, where the access sequence length is coprime to an index of the access sequence, and create the candidate sequence list.

Referring to FIG. 12, based on the embodiment corresponding to FIG. 10, a terminal according to another embodiment of the present invention further includes:

a fourth calculating unit 517, configured to calculate an access sequence length according to the preset subcarrier spacing and the specified bandwidth, where
the second selecting unit 512 is further configured to determine an access sequence index range according to the access sequence length that is calculated by the fourth calculating unit, select an access sequence as a candidate access sequence, where the access sequence length is coprime to an index of the access sequence and a specified shift value $d_u$ is less than a preset threshold, and create the candidate sequence list.

Referring to FIG. 13, a base station according to an embodiment of the present invention includes:

a third receiving unit 601, configured to receive a random access signal sent by a terminal;
a second obtaining unit 602, configured to obtain a first access sequence carried in the random access signal received by the third receiving unit 601;
a first determining unit 603, configured to determine a round-trip transmission delay according to the first access sequence obtained by the second obtaining unit 602;
a third sending unit 604, configured to send a timing advance adjustment command to the terminal, where the timing advance adjustment command carries the round-trip transmission delay determined by the first determining unit 603, where
the third receiving unit 601 is further configured to receive a first message sent by the terminal; and
a demodulating unit 605, configured to demodulate the first message received by the third receiving unit 601, and obtain an identifier of the terminal from the first message, where
the third sending unit 604 is further configured to send a second message to the terminal and use the second message to carry the identifier of the terminal which is obtained by the demodulating unit 605; and
the third receiving unit 601 is further configured to receive an access response message sent by the terminal, so as to confirm that the terminal has accessed a physical random access channel.

In this embodiment of the present invention, a third receiving unit 601 receives a random access signal sent by a terminal; a second obtaining unit 602 obtains a first access sequence carried in the random access signal received by the third receiving unit 601; a first determining unit 603 determines a round-trip transmission delay according to the first access sequence obtained by the second obtaining unit 602; a third sending unit 604 sends a timing advance adjustment command to the terminal, where the timing advance adjustment command carries the round-trip transmission delay determined by the first determining unit 603; the third receiving unit 601 receives a first message sent by the terminal; a demodulating unit 605 demodulates the first message received by the third receiving unit 601, and obtains an identifier of the terminal from the first message; the third sending unit 604 sends a second message to the terminal and uses the second message to carry the identifier of the terminal which is obtained by the demodulating unit 604; and the third receiving unit 601 receives an access response message sent by the terminal, so as to confirm that the terminal has accessed a physical random access channel. The base station provided in this embodiment of the present invention may ensure that a terminal is able to access a PRACH even when the terminal is located far away and moves at a high speed.

Based on the embodiment corresponding to FIG. 13,
the first determining unit 603 is specifically configured to determine, according to an index of a leading access sequence of a cell in which the terminal is located, a specified number of access sequences used by the cell in which the terminal is located, perform correlation on each access sequence among the specified number of determined access sequences and the first access sequence separately, and determine the round-trip transmission delay according to a location of a maximum peak value after the correlation;
the first determining unit 603 is specifically configured to determine, according to an index of a leading access sequence of a cell in which the terminal is located, a specified number of access sequences used by the cell in which the terminal is located, perform correlation on each access sequence among the specified number of determined access sequences and the first access sequence separately, and determine the round-trip transmission delay according to a location of a first-path peak value after the performing correlation.

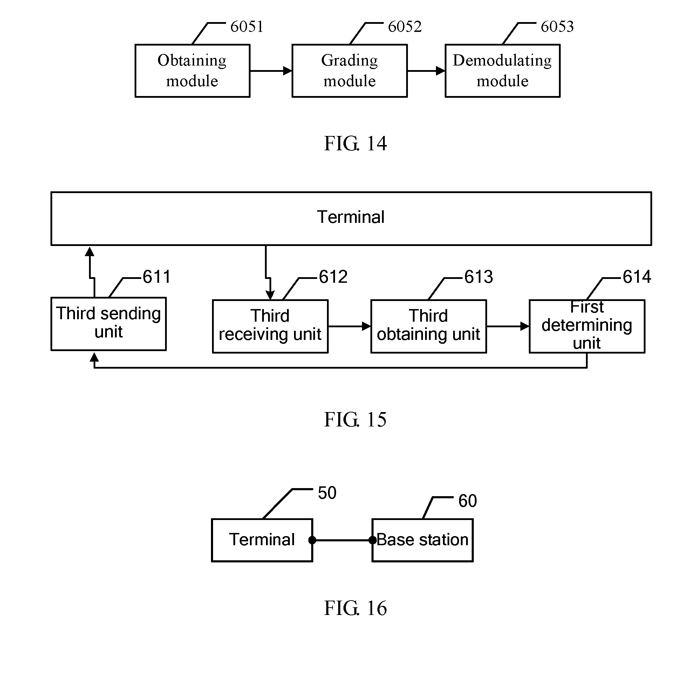

Referring to FIG. 14, based on the embodiment corresponding to FIG. 13, the demodulating unit 605 includes:

an obtaining module 6051, configured to obtain a frequency shift range;
a grading module 6052, configured to grade the frequency shift range obtained by the obtaining module 6051; and
a demodulating module 6053, configured to demodulate the first message separately within the frequency shift range graded by the grading module 6052.

Referring to FIG. 15, a base station according to another embodiment of the present invention includes:

a fourth sending unit 611, configured to send random access indication information to a terminal, where the random access indication information carries a specified access sequence index;

a fourth receiving unit 612, configured to receive a random access signal sent by the terminal;

a third obtaining unit 613, configured to obtain a second access sequence from the random access signal received by the fourth receiving unit 612; and

a second determining unit 614, configured to determine a round-trip transmission delay according to the second access sequence obtained by the third obtaining unit, where

the fourth sending unit 611 is further configured to send indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

In this embodiment of the present invention, a fourth sending unit 611 sends random access indication information to a terminal, where the random access indication information carries a specified access sequence index; a fourth receiving unit 612 receives a random access signal sent by the terminal; a third obtaining unit 613 obtains a second access sequence from the random access signal received by the fourth receiving unit 612; a second determining unit 614 determines a round-trip transmission delay according to the second access sequence obtained by the third obtaining unit; and the fourth sending unit 611 sends indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay. The base station according to this embodiment of the present invention may ensure that a terminal is able to access a PRACH even when the terminal is located far away and moves at a high speed.

Based on the embodiment corresponding to FIG. 15,

the second determining unit 614 is specifically configured to determine, according to an index of a leading access sequence of a cell in which the terminal is located, a specified number of access sequences used by the cell in which the terminal is located, perform correlation on each access sequence among the specified number of determined access sequences and the second access sequence separately, and determine the round-trip transmission delay according to a location of a maximum peak value after the correlation;

the second determining unit 614 is specifically configured to determine, according to an index of a leading access sequence of a cell in which the terminal is located, a specified number of access sequences used by the cell in which the terminal is located, perform correlation on each access sequence among the specified number of determined access sequences and the second access sequence separately, and determine the round-trip transmission delay according to a location of a first-path peak value after the correlation.

Referring to FIG. 16, a random access system according to an embodiment of the present invention includes a terminal 50 and a base station 60.

In a contention mode:

the terminal 50 is configured to: obtain an index of a leading access sequence that is sent by a base station; find, from a pre-created candidate sequence list according to the index of the leading access sequence, a specified number of access sequences used in a cell in which the terminal is located, select, from the found specified number of access sequences, any one access sequence as a first access sequence, and map the first access sequence onto a specified bandwidth according to a preset subcarrier spacing to generate a random access signal, where the subcarrier spacing is less than 1.25 kHz; send the random access signal to the base station, so that the base station determines a round-trip transmission delay according to the access sequence in the random access signal; receive a timing advance adjustment command sent by the base station, where the timing advance adjustment command carries the round-trip transmission delay determined by the base station; adjust a timing advance according to the round-trip transmission delay to make the adjusted timing advance completely compensate for the round-trip transmission delay; send a first message to the base station according to the adjusted timing advance; receive a second message, and recognize a terminal identifier carried in the second message; and if the terminal identifier is the same as an identifier of the terminal, send an access response message to the base station so that the base station confirms that the terminal has already accessed a physical random access channel; and

the base station 60 is configured to: receive a random access signal sent by a terminal, and obtain an index of an access sequence carried in the random access signal; determine a round-trip transmission delay according to the carried first access sequence; send a timing advance adjustment command to the terminal, where the timing advance adjustment command carries the determined round-trip transmission delay; and receive a first message sent by the terminal, demodulate the first message, and obtain a terminal identifier from the first message; send a second message to the terminal, and use the second message to carry the terminal identifier; and receive an access response message sent by the terminal, so as to confirm that the terminal has accessed a physical random access channel.

In a non-contention mode:

the terminal 50 is configured to receive random access indication information sent by a base station, where the random access indication information carries a specified access sequence index; select, from a pre-created candidate sequence list according to the specified access sequence index, an access sequence corresponding to the specified access sequence index as a second access sequence, and map the second access sequence onto a specified bandwidth according to preset subcarrier spacing to generate a random access signal, where the subcarrier spacing is less than 1.25 kHz; send the random access signal to the base station, so that the base station determines a round-trip transmission delay according to the second access sequence in the random access signal; receive indication information of successful access to a physical random access channel which is sent by the base station, where the indication information of successful access carries the round-trip transmission delay; and adjust a timing advance according to the round-trip transmission delay to make the adjusted timing advance completely compensate for the round-trip transmission delay; and

the base station 60 is configured to send random access indication information to a terminal, where the random access indication information carries a specified access sequence index; receive a random access signal sent by the terminal, and obtain the second access sequence from the random access signal; determine a round-trip transmission delay according to the second access sequence; and send indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay.

A person of ordinary skill in the art may understand that all or a part of the steps of various methods in the foregoing embodiments may be implemented by a program instructing relevant hardware. The program may be stored in a computer readable storage medium, where the storage medium includes a ROM, a RAM, a magnetic disk, or an optical disc or the like.

The foregoing has described a random access method, a terminal, a base station and a system in detail according to embodiments of the present invention. Specific examples are used in this specification to describe the principles and implementations of the present invention. The descriptions of the foregoing embodiments are merely intended to help understand the method and core idea of the present invention. In addition, with respect to the implementations and the application scope, modifications may be made by a person of ordinary skill in the art according to the idea of the present invention. Therefore, this specification shall not be construed as a limitation on the present invention.

**Claims**

1. A random access method, comprising:

   obtaining an index of a leading access sequence used by a cell in which a terminal is located;

   finding, from a pre-created candidate sequence list according to the index of the leading access sequence, a specified number of access sequences used by the cell in which the terminal is located, and selecting, from the found specified number of access sequences, any one access sequence as a first access sequence;

   mapping the first access sequence onto a specified bandwidth according to a preset subcarrier spacing to generate a first random access signal, wherein the subcarrier spacing is less than 1.25 kHz;

   sending the random access signal to a base station, so that the base station determines a round-trip transmission delay according to the first access sequence in the random access signal;

   receiving a timing advance adjustment command sent by the base station, wherein the timing advance adjustment command carries the round-trip transmission delay; and

   adjusting a timing advance according to the round-trip transmission delay, and sending a first message to the base station according to the adjusted timing advance, so that the base station demodulates the first message and enables the terminal to access a physical random access channel.

2. The method according to claim 1, before the finding, from a pre-created candidate sequence list, a specified number of access sequences used by the cell in which the terminal is located, further comprising:

> calculating an access sequence length according to the preset subcarrier spacing and the specified bandwidth; and
>
> determining an access sequence index range according to the access sequence length, selecting an access sequence as a candidate access sequence, wherein the access sequence length is coprime to an index of the access sequence, and creating the candidate sequence list.

3. The method according to claim 1, before the finding, from a pre-created candidate sequence list, a specified number of access sequences used by the cell in which the terminal is located, further comprising:

> calculating an access sequence length according to the preset subcarrier spacing and the specified bandwidth; and
>
> determining an access sequence index range according to the access sequence length, selecting an access sequence as a candidate access sequence, wherein the access sequence length is coprime to an index of the access sequence and a specified shift value du is less than a preset threshold, and creating the candidate sequence list.

4. A random access method, comprising:

> receiving random access indication information sent by a base station, wherein the random access indication information carries a specified access sequence index;
>
> selecting, from a pre-created candidate sequence list according to the specified access sequence index, an access sequence corresponding to the specified access sequence index as a second access sequence, and mapping the second access sequence onto a specified bandwidth according to a preset subcarrier spacing to generate a random access signal, wherein the subcarrier spacing is less than 1.25 kHz;
>
> sending the random access signal to the base station, so that the base station determines a round-trip transmission delay according to the second access sequence in the random access signal;
>
> receiving indication information of successful access to a physical random access channel which is sent by the base station, wherein the indication information of successful access carries the round-trip transmission delay; and
>
> adjusting a timing advance according to the round-trip transmission delay to make the adjusted timing advance completely compensate for the round-trip transmission delay.

5. The method according to claim 4, before the selecting, from a pre-created candidate sequence list, an access sequence corresponding to the specified access sequence index as a second access sequence, further comprising:

> calculating an access sequence length according to the preset subcarrier spacing and the specified bandwidth; and
>
> determining an access sequence index range according to the access sequence length, selecting an access sequence as a candidate access sequence, wherein the access sequence length is coprime to an index of the access sequence, and creating the candidate sequence list.

6. The method according to claim 4, before the selecting, from a pre-created candidate sequence list, an access sequence corresponding to the specified access sequence index as a second access sequence, further comprising:

> calculating an access sequence length according to the preset subcarrier spacing and the specified bandwidth; and
>
> determining an access sequence index range according to the access sequence length, selecting an access sequence as a candidate access sequence, wherein the access sequence length is coprime to an index of the access sequence and a specified shift value du is less than a preset threshold, and creating the candidate sequence list.

7. A random access method, comprising:

> receiving a random access signal sent by a terminal, and obtaining a first access sequence carried in the random access signal;
>
> determining a round-trip transmission delay according to the first access sequence;

sending a timing advance adjustment command to the terminal, wherein the timing advance adjustment command carries the determined round-trip transmission delay, so that the terminal adjusts a timing advance according to the round-trip transmission delay; and

receiving a first message sent by the terminal, and demodulating the first message, so that the terminal accesses a physical random access channel.

8. The method according to claim 7, wherein the determining a round-trip transmission delay according to the carried first access sequence specifically comprises:

determining, according to an index of a leading access sequence of a cell in which the terminal is located, a specified number of access sequences used by the cell in which the terminal is located, performing correlation on each access sequence among the specified number of determined access sequences and the first access sequence separately, and determining the round-trip transmission delay according to a location of a maximum peak value after the correlation.

9. The method according to claim 7, wherein the determining a round-trip transmission delay according to the carried first access sequence specifically comprises:

determining, according to an index of a leading access sequence of a cell in which the terminal is located, a specified number of access sequences used by the cell in which the terminal is located, performing correlation on each access sequence among the specified number of determined access sequences and the first access sequence separately, and determining the round-trip transmission delay according to a location of a first-path peak value after the correlation.

10. The method according to any one of claims 7 to 9, wherein the demodulating the first message specifically comprises:

obtaining a frequency shift range, and grading the frequency shift range; and demodulating the first message within the graded frequency shift range separately.

11. A random access method, comprising:

sending random access indication information to a terminal, wherein the random access indication information carries a specified access sequence index;

receiving a random access signal sent by the terminal, and obtaining a second access sequence from the random access signal;

determining a round-trip transmission delay according to the second access sequence; and

sending indication information of successful access to a physical random access channel to the terminal, wherein the indication information of successful access carries the round-trip transmission delay, so that the terminal adjusts a timing advance according to the round-trip transmission delay to make the adjusted timing advance completely compensate for the round-trip transmission delay.

12. The method according to claim 11, wherein the determining a round-trip transmission delay according to the second access sequence specifically comprises:

determining, according to an index of a leading access sequence of a cell in which the terminal is located, a specified number of access sequences used by the cell in which the terminal is located, performing correlation on each access sequence among the specified number of determined access sequences and the second access sequence separately, and determining the round-trip transmission delay according to a location of a maximum peak value after the correlation.

13. The method according to claim 11, wherein the determining a round-trip transmission delay according to the second access sequence specifically comprises:

determining, according to an index of a leading access sequence of a cell in which the terminal is located, a specified number of access sequences used by the cell in which the terminal is located, performing correlation on each access sequence among the specified number of determined access sequences and the second access sequence separately, and determining the round-trip transmission delay according to a location of a first-path peak value after the correlation.

**14.** A terminal, comprising:

a first obtaining unit, configured to obtain an index of a leading access sequence used by a cell in which a terminal is located;

a first query unit, configured to find, from a pre-created candidate sequence list according to the index of the leading access sequence that is obtained by the first obtaining unit, a specified number of access sequences used by the cell in which the terminal is located;

a first selecting unit, configured to select, from the specified number of access sequences found by the first query unit, any one access sequence as a first access sequence;

a first signal generating unit, configured to map the first access sequence selected by the first selecting unit onto a specified bandwidth according to a preset subcarrier spacing to generate a first random access signal, wherein the subcarrier spacing is less than 1.25 kHz;

a first sending unit, configured to send the first random access signal generated by the first signal generating unit to a base station, so that the base station determines a round-trip transmission delay according to the first access sequence in the random access signal;

a first receiving unit, configured to receive a timing advance adjustment command sent by the base station, wherein the timing advance adjustment command carries the round-trip transmission delay; and

a first adjusting unit, configured to adjust a timing advance according to the round-trip transmission delay carried in the timing advance adjustment command received by the first receiving unit, wherein

the first sending unit is configured to send a first message to the base station according to the timing advance adjusted by the first adjusting unit, so that the base station demodulates the first message and enables the terminal to access a physical random access channel.

**15.** The terminal according to claim 14, further comprising:

a first calculating unit, configured to calculate an access sequence length according to the preset subcarrier spacing and the specified bandwidth, wherein

the first selecting unit is further configured to determine an access sequence index range according to the access sequence length that is calculated by the first calculating unit, select an access sequence as a candidate access sequence, wherein the access sequence length is coprime to an index of the access sequence, and create the candidate sequence list.

**16.** The terminal according to claim 14, further comprising:

a second calculating unit, configured to calculate an access sequence length according to the preset subcarrier spacing and the specified bandwidth, wherein

the first selecting unit is further configured to determine an access sequence index range according to the access sequence length that is calculated by the second calculating unit, select an access sequence as a candidate access sequence, wherein the access sequence length is coprime to an index of the access sequence and a specified shift value du is less than a preset threshold, and create the candidate sequence list.

**17.** A terminal, comprising:

a second receiving unit, configured to receive random access indication information sent by a base station, wherein the random access indication information carries a specified access sequence index;

a second selecting unit, configured to select, from a pre-created candidate sequence list according to the specified access sequence index received by the second receiving unit, an access sequence corresponding to the specified access sequence index as a second access sequence;

a second signal generating unit, configured to map the second access sequence selected by the second selecting unit onto a specified bandwidth according to a preset subcarrier spacing to generate a random access signal, wherein the subcarrier spacing is less than 1.25 kHz;

a second sending unit, configured to send the random access signal generated by the second signal generating unit to a base station, so that the base station determines a round-trip transmission delay according to the second access sequence in the random access signal, wherein

the second receiving unit is further configured to receive indication information of successful access to a physical random access channel that is sent by the base station, wherein the indication information of successful access carries the round-trip transmission delay; and

a second adjusting unit, configured to adjust a timing advance according to the round-trip transmission delay carried in the indication information of successful access which is received by the second receiving unit, so that the adjusted timing advance completely compensates for the round-trip transmission delay.

**18.** The terminal according to claim 17, further comprising:

a third calculating unit, configured to calculate an access sequence length according to the preset subcarrier spacing and the specified bandwidth, wherein
the second selecting unit is further configured to determine an access sequence index range according to the access sequence length that is calculated by the third calculating unit, select an access sequence as a candidate access sequence, wherein the access sequence length is coprime to an index of the access sequence, and create the candidate sequence list.

**19.** The terminal according to claim 17, further comprising:

a fourth calculating unit, configured to calculate an access sequence length according to the preset subcarrier spacing and the specified bandwidth, wherein
the second selecting unit is further configured to determine an access sequence index range according to the access sequence length that is calculated by the fourth calculating unit, select an access sequence as a candidate access sequence, wherein the access sequence length is coprime to an index of the access sequence and a specified shift value du is less than a preset threshold, and create the candidate sequence list.

**20.** Abase station, comprising:

a third receiving unit, configured to receive a random access signal sent by a terminal;
a second obtaining unit, configured to obtain a first access sequence carried in the random access signal received by the third receiving unit;
a first determining unit, configured to determine a round-trip transmission delay according to the first access sequence obtained by the second obtaining unit;
a third sending unit, configured to send a timing advance adjustment command to the terminal, wherein the timing advance adjustment command carries the round-trip transmission delay determined by the first determining unit, so that the terminal adjusts a timing advance according to the round-trip transmission delay, wherein the third receiving unit is further configured to receive a first message sent by the terminal; and
a demodulating unit, configured to demodulate the first message received by the third receiving unit, to enable the terminal access a physical random access channel.

**21.** The base station according to claim 20, wherein:

the first determining unit is specifically configured to determine, according to an index of a leading access sequence of a cell in which the terminal is located, a specified number of access sequences used by the cell in which the terminal is located, perform correlation on each access sequence among the specified number of determined access sequences and the first access sequence separately, and determine the round-trip transmission delay according to a location of a maximum peak value after the correlation.

**22.** The base station according to claim 20, wherein:

the first determining unit is specifically configured to determine, according to an index of a leading access sequence of a cell in which the terminal is located, a specified number of access sequences used by the cell in which the terminal is located, perform correlation on each access sequence among the specified number of determined access sequences and the first access sequence separately, and determine the round-trip transmission delay according to a location of a first-path peak value after the correlation.

**23.** The base station according to any one of claims 20 to 22, wherein the demodulating unit comprises:

an obtaining module, configured to obtain a frequency shift range;
a grading module, configured to grade the frequency shift range obtained by the obtaining module; and
a demodulating module, configured to demodulate the first message separately within the frequency shift range graded by the grading module.

24. Abase station, comprising:

a fourth sending unit, configured to send random access indication information to a terminal, wherein the random access indication information carries a specified access sequence index;
a fourth receiving unit, configured to receive a random access signal sent by the terminal;
a third obtaining unit, configured to obtain a second access sequence from the random access signal received by the fourth receiving unit; and
a second determining unit, configured to determine a round-trip transmission delay according to the second access sequence obtained by the third obtaining unit, wherein
the fourth sending unit is further configured to send indication information of successful access to a physical random access channel to the terminal, wherein the indication information of successful access carries the round-trip transmission delay, so that the terminal adjusts a timing advance according to the round-trip transmission delay to make the adjusted timing advance completely compensate for the round-trip transmission delay.

25. The base station according to claim 24, wherein:

the second determining unit is specifically configured to determine, according to an index of a leading access sequence of a cell in which the terminal is located, a specified number of access sequences used by the cell in which the terminal is located, perform correlation on each access sequence among the specified number of determined access sequences and the second access sequence separately, and determine the round-trip transmission delay according to a location of a maximum peak value after the correlation.

26. The second determining unit is specifically configured to: determine, according to an index of a leading access sequence of a cell in which the terminal is located, a specified number of access sequences used by the cell in which the terminal is located, perform correlation on each access sequence among the specified number of determined access sequences and the second access sequence separately, and determine the round-trip transmission delay according to a location of a first-path peak value after the correlation.

27. A random access system, comprising a terminal and a base station, wherein the terminal is a terminal according to any one of claims 14 to 19, and the base station is a base station according to any one of claims 20 to 26.

Obtain an index of a leading access sequence used by a cell in which a terminal is located — 101

Find, from a pre-created candidate sequence list according to the index of the leading access sequence, a specified number of access sequences used by the cell in which the terminal is located, and select, from the found specified number of access sequences, any one access sequence as a first access sequence — 102

Map the first access sequence onto a specified bandwidth according to a preset subcarrier spacing to generate a first random access signal, where the subcarrier spacing is less than 1.25 kHz — 103

Send the random access signal to a base station, so that the base station determines a round-trip transmission delay according to the access sequence in the random access signal — 104

Receive a timing advance adjustment command sent by the base station, where the timing advance adjustment command carries the round-trip transmission delay determined by the base station — 105

Adjust a timing advance according to the round-trip transmission delay, and send a first message to the base station according to the adjusted timing advance, so that the base station demodulates the first message and enables the terminal to access a physical random access channel — 106

FIG. 1

Receive random access indication information sent by a base station, where the random access indication information carries a specified access sequence — 201

Select the specified access sequence from a pre-created candidate sequence list, and map the specified access sequence onto a specified bandwidth according to a preset subcarrier spacing to generate a random access signal, where the subcarrier spacing is less than 1.25 kHz — 202

Send the random access signal to the base station, so that the base station determines a round-trip transmission delay according to the specified access sequence in the random access signal — 203

Receive indication information of successful access to a physical random access channel that is sent by the base station, where the successful access indication information carries the round-trip transmission delay — 204

Adjust a timing advance according to the round-trip transmission delay to make the adjusted timing advance completely compensate for the round-trip transmission delay — 205

FIG. 2

Receive a random access signal sent by a terminal, and obtain an access sequence carried in the random access signal —— 301

Determine a round-trip transmission delay according to the carried access sequence —— 302

Send a timing advance adjustment command to the terminal, where the timing advance adjustment command carries the determined round-trip transmission delay, so that the terminal adjusts a timing advance according to the round-trip transmission delay —— 303

Receive a first message sent by the terminal, demodulate the first message, and enable the terminal to access a physical random access channel —— 304

FIG. 3

Send random access indication information to a terminal, where the random access indication information carries a second access sequence — 401

Receive a random access signal sent by the terminal, and obtain a second access sequence index from the random access signal — 402

Determine a round-trip transmission delay according to the second access sequence — 403

Send indication information of successful access to a physical random access channel to the terminal, where the indication information of successful access carries the round-trip transmission delay, so that the terminal adjusts a timing advance according to the round-trip transmission delay to make the adjusted timing advance completely compensate for the round-trip transmission delay — 404

FIG. 4

| Terminal | | Base station |
|---|---|---|
| A1. Generate a random access signal | | |
| | A2. Send a random access signal → | |
| | | A3. Determine a round-trip transmission delay |
| | ← A4. Send a timing advance adjustment command | |
| A5. Adjust a timing advance | | |
| | A6. Send a first message → | |
| | ← A7. Send a second message | |
| | A8. Send an access response message → | |

FIG. 5

Terminal

Base station

B1. Send random access indication information

B2. Generate a random access signal

B3. Send a random access signal

B4. Determine a round-trip transmission delay

B5. Send indication information of successful access to a physical random access channel

FIG. 6

Base station

501 First obtaining unit

502 First query unit

503 First selecting unit

504 First signal generating unit

505 / 506 First sending unit

506 First receiving unit

507 First adjusting unit

FIG. 7

First selecting unit —— 503

First calculating unit —— 508

FIG. 8

First selecting unit —— 503

Second calculating unit —— 509

FIG. 9

Base station

Second receiving unit —511

Second selecting unit —512

Second signal generating unit —513

Second sending unit —514

Second adjusting unit —515

FIG. 10

Second
selecting unit — 512

Third calculating
unit — 516

FIG. 11

Second
selecting unit — 512

Fourth
calculating unit — 517

FIG. 12

Terminal

Third
receiving unit — 601

Second
obtaining unit — 602

First
determining
unit — 603

Third sending
unit — 604

Demodulating
unit — 605

FIG. 13

6051

Obtaining
module

6052

Grading
module

6053

Demodulating
module

FIG. 14

Terminal

611

Third sending
unit

612

Third
receiving unit

613

Third
obtaining unit

614

First
determining
unit

FIG. 15

50

Terminal

60

Base station

FIG. 16

## INTERNATIONAL SEARCH REPORT

| International application No. |
|---|
| PCT/CN2013/070523 |

### A. CLASSIFICATION OF SUBJECT MATTER

H04W 74/08 (2009.01) i

According to International Patent Classification (IPC) or to both national classification and IPC

### B. FIELDS SEARCHED

Minimum documentation searched (classification system followed by classification symbols)

IPC: H04Q 7/-; H04W 74/-

Documentation searched other than minimum documentation to the extent that such documents are included in the fields searched

Electronic data base consulted during the international search (name of data base and, where practicable, search terms used)

CNABS, CNTXT, VEN, CNKI: prach, timing advance, round trip delay, access, sub-carrier, preamble, TA, access sequence, access code, index, interval

### C. DOCUMENTS CONSIDERED TO BE RELEVANT

| Category* | Citation of document, with indication, where appropriate, of the relevant passages | Relevant to claim No. |
|---|---|---|
| Y | CN 101296023 A (ZTE CORP.) 29 October 2008 (29.10.2008) description, page 3, lines 8-14 | 7, 11, 20, 24 |
| Y | CN 101335986 A (HUAWEI TECHNOLOGIES CO., LTD.) 31 December 2008 (31.12.2008) description, page 2, line 27 to page3, line 1 | 7, 11, 20, 24 |
| A | CN 102244536 A (ZTE CORP.) 16 November 2011 (16.11.2011) the whole document | 1-27 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 09 April 2013 (09.04.2013) | 18 April 2013 (18.04.2013) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LIU, Xiaohua Telephone No. (86-10)62411323 |
|---|---|

Form PCT/ISA /210 (second sheet) (July 2009)

**INTERNATIONAL SEARCH REPORT**
Information on patent family members

| | International application No. |
|---|---|
| | PCT/CN2013/070523 |

| Patent Documents referred in the Report | Publication Date | Patent Family | Publication Date |
|---|---|---|---|
| CN 101296023 A | 29.10.2008 | None | |
| CN 101335986 A | 31.12.2008 | CN 101335986 B | 02.11.2011 |
| CN 102244536 A | 16.11.2011 | WO 2011140875 A1 | 17.11.2011 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210050046